# EUROPÄISCHE PATENTSCHRIFT

(11) **EP 0 590 471 B1**
(45) Veröffentlichungstag und Bekanntmachung des Hinweises auf die Patenterteilung: **11.12.1996**
(21) Anmeldenummer: 93115165.8
(22) Anmeldetag: 21.09.1993
(51) Int. Cl.: C08L 25/04, C08L 33/10, C08L 25/02

(54) **Lichtstreuende Polystyrolformmasse und daraus hergestellte Formkörper**
Light-scattering polystyrene moulding composition and moulded articles prepared therefrom
Composition de moulage de polystyrène diffusant la lumière et articles moulés de celle-ci

(30) Priorität: 24.09.1992 DE 4231995
(43) Veröffentlichungstag der Anmeldung: 06.04.1994
(73) Patentinhaber: Röhm GmbH, 64293 Darmstadt (DE)
(72) Erfinder: Siol, Werner, Dr., D-64297 Darmstadt-Eberstadt (DE); Post, Heinrich, D-46562 Voerde (DE)

(56) Entgegenhaltungen:
- EP-A- 0 306 785
- DE-A- 2 146 607
- FR-A- 1 526 375

## Beschreibung

### Gebiet der Erfindung

Die Erfindung betrifft lichtstreuende Polystyrolformmassen mit eingelagerten vernetzten Teilchen, bestehend aus Methacrylat-Copolymerisaten, und aus diesen Formmassen hergestellte Formkörper.

### Stand der Technik

Zur Eintrübung von polymeren Materialien, die zur Herstellung von diffus streuenden Formteilen verwendet werden, werden im allgemeinen anorganische Pigmente, wie beispielsweise Titandioxid, Bariumsulfat oder Kieselsäure verwendet. Setzt man diese Pigmente in ausreichenden Konzentrationen und mit entsprechender mittlerer Teilchengröße sowie entsprechendem Brechungsindex ein, so wird zwar eine gute Diffusionswirkung beim Durchlicht beobachtet, die Lichtdurchlässigkeit ist jedoch stark vermindert. Ein weiterer Nachteil der anorganischen Pigmente ist die Sedimentation während der Polymerisation, wodurch die Pigmentkonzentration im Formteil ungleichmäßig wird, was zu einer deutlichen Beeinträchtigung der physikalischen Eigenschaften des Polymermaterials führt. Deshalb ist man dazu übergegangen, die anorganischen Pigmente durch dimensionsstabile Polymerisatteilchen mit hoher Brechungsindexdifferenz bezogen auf die Polymermatrix zu ersetzen.

So beschreibt US-Patent 4 464 513 beispielsweise eine eingetrübte Polyvinylchlorid (PVC)-Formmasse, die vernetzte Polymerteilchen mit Teilchengrößen zwischen 35 und 500 µm in Anteilen von bis zu etwa 30 Gew.-% enthält. Die Polymerisatteilchen bestehen aus Vinylaromaten, Alkylacrylaten, Alkylmethacrylaten, gegebenenfalls weiteren monoethylenisch ungesättigten Monomeren sowie einem vernetzenden Monomeren mit mindestens zwei Doppelbindungen. Die Streuteilchen gemäß US-Patent 4 464 513 können auch für andere thermoplastische Formmassen eingesetzt werden.

In US-Patent 4 594 363 (EP-A 188 325) werden Streuteilchen mit einem zweiphasigen Kern-Schale-Aufbau beansprucht, wobei Kern und Schale Monomere mit Säuregruppen enthalten. Die dispergierten Streuteilchen werden mit flüchtigen Basen angequollen, die beim Trocknen verdampfen und Hohlräume in den Streuteilchen zurücklassen. Die Streuteilchen werden bevorzugt als Ersatz für anorganische Pigmente in Dispersionsfarben und in thermisch härtenden Lacksystemen eingesetzt.
EP-A 342 283 beschreibt kugelförmige Streuteilchen mit einer Teilchengröße zwischen 2 und 15 µm und einem mehrphasigen Aufbau, wobei die Streuteilchen in Anteilen von bis zu 40 Gew.-% in einer thermoplastischen, polymeren Matrixphase anwesend sein können. Die Brechungsindices der Streuteilchen und der Matrixphase differieren minimal um 0,003, maximal um 0,2 Einheiten. Bevorzugt sind die Streuteilchen aus Acrylaten und Methacrylaten aufgebaut, die Matrixphase aus Polymerisaten mit einem höheren Brechungsindex, wie beispielsweise PVC oder Polystyrol.
In Jpn. Kokai Tokkyo Koho JP 61 159 440 werden Streuteilchen für Polymethylmethacrylat (PMMA) beschrieben, die in Anteilen von bis zu 30 Gew.-% im PMMA anwesend sein können und deren Teilchengrößen zwischen 30 und 300 µm liegen. Die Streuteilchen sind aus einem Copolymerisat aufgebaut, bestehend aus Vinylaromaten, Alkylacrylaten, Alkylmethacrylat sowie vernetzenden Comonomeren.
DE-OS 35 28 165 (= US-Patent 4 876 311) betrifft eingetrübte Kunststoffelemente enthaltend vernetzte Polymerisatperlen in Anteilen zwischen 3 und 30 Gew.-% bezogen auf die Polymermatrix mit einer Teilchengröße zwischen 20 und 50 µm. Die als Streuteilchen dienenden Polymerisatperlen sind aus aromaten- oder halogenhaltigen Monomeren, aus mit vorgenannten Monomeren copolymerisierbaren vinylischen Monomeren, aus vernetzenden Monomeren und gegebenenfalls aus stark polaren Monomeren aufgebaut. Als Polymermatrix, deren Brechungsindex um mindestens 0,02 Einheiten von dem der Streuteilchen abweichen muß, kommen vorzugsweise Acrylharze in Frage.
Streuteilchen für Methacrylharze, bestehend aus Copolymerisaten aus Methylmethacrylat, Butyl(meth)acrylat sowie einem Vernetzer, wie beispielsweise Allylmethacrylat, werden in Jpn. Kokai Tokkyo Koho JP 82 14 650 beschrieben.

DE-PS 21 46 607 (US-Patente 3 992 486, 4 000 216) beansprucht durchscheinende bis opake Polymerisatgemische, bestehend aus einer kontinuierlichen Phase eines löslichen, unvernetzten Polymerisats, hergestellt durch Polymerisation von (Meth)acrylsäureestern, Styrolen, Vinylchlorid oder Vinylacetat, in denen vernetzte Polymerisatteilchen dispergiert sind, bestehend aus 87 bis 99,99 Gew.-% mindestens eines monoethylenisch ungesättigten Monomeren aus der Gruppe der Acryl- oder der Methacrylsäureester oder der Styrole sowie 0,01 bis 3 Gew.-% mindestens eines mehrfach ungesättigten Monomeren und gegebenenfalls 0 bis 10 Gew.-% eines polaren Monomeren. Die Streuteilchen sind praktisch kugelförmig und weisen Teilchengrößen zwischen 0,5 und 30 µm auf.

### Aufgabe und Lösung

Die Lösungen des Standes der Technik können bei der Verarbeitung von Streukörper enthaltenden Formmassen, insbesondere von Polystyrol-Formmassen indessen nicht voll befriedigen. Oftmals treten bei der thermoplastischen Verarbeitung, insbesondere bei der Extrusion, von Streukörper enthaltenden Formmassen eine Agglomeration der Streuteilchen und dadurch bedingt lokale Heterogenitäten auf in der Lichtstreuung bei Formteilen, die aus diesen Formmassen gebildet werden.
Es wurde nun gefunden, daß Streukörper SK bestehend aus Copolymerisaten CP aufgebaut aus
p1) 20 bis 89,5 Gew.-% Methylmethacrylat und/oder Ethylmethacrylat,
p2) 10 bis 80 Gew.-% mindestens eines Monomeren der Formel I: 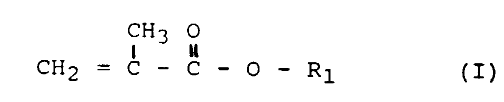 worin R₁ für einen Alkylrest mit 3 bis 24 Kohlenstoffatomen steht,
p3) 0,5 bis 10 Gew.-% mindestens eines vernetzenden Monomeren mit zwei oder mehr ethylenisch ungesättigten, radikalisch polymerisierbaren Gruppen und gegebenenfalls
p4) 0 bis 10 Gew.-% weiteren mit p1), p2), p3) radikalisch copolymerisierbaren, ethylenisch ungesättigten Monomeren,
wobei sich die Monomeren p1), p2), p3) und p4) zu 100 Gew.-% ergänzen, mit der Maßgabe, daß sich die Brechungsindices des Copolymerisats CP und des Matrixpolymeren MP um mindestens 0.02 Einheiten unterscheiden
in Matrixphasen MP, aufgebaut aus mindestens 50 Gew.-% Styrol und/oder substituierten Styrolen, wobei die Matrixphase MP Zähphasenanteile ZP mit einer Glastemperatur Tg kleiner 10 Grad C enthalten kann, in hervorragender Weise beim Schmelzemischen homogen dispergierbar sind und bei weiterer thermoplastischer Verarbeitung homogen dispergiert bleiben. Die mittlere Teilchengröße der Streukörper SK beträgt 0,5 bis 150 µm, wobei der Anteil der Streukörper SK 0,1 bis 60 Gew.-% bezogen auf die lichtstreuende Polystyrolformmasse ausmacht, die der Matrixphase MP 40 bis 99,9 Gew.-%.
In einer weiteren Ausführungsform der Erfindung wird den Streukörpern SK in Anteilen von 5 bis 95 Gew.-Teilen bezogen auf SK eines polymeren Fließmittels FM vor der Einarbeitung in die Matrixphase MP zugemischt, wobei FM aufgebaut ist aus:
f1) 20 bis 90 Gew.-% Methylmethacrylat und/oder Ethylmethacrylat
f2) 10 bis 80 Gew.-% mindestens eines Monomeren der Formel I, sowie gegebenenfalls
f3) 0 bis 10 Gew.-% weiteren mit f1) und f2) radikalisch copolymerisierbaren, ethylenisch ungesättigten Monomeren,
wobei sich die Monomeren f1), f2) und f3) zu 100 Gew.-% ergänzen.

### Durchführung der Erfindung

### Die Streukörper SK

Die Anteile der Monomereinheiten p1), p2), p3) und gegebenenfalls p4), die das Copolymerisat CP aufbauen, ergänzen sich zu 100 Gew.-%.
Die aus dem Copolymerisat CP aufgebauten Streukörper SK bestehen aus Latexpartikeln mit einer mittleren Teilchengröße zwischen 0,5 und 150 µm, bevorzugt zwischen 1 und 10 µm, besonders bevorzugt zwischen 1 und 5 µm. Ihre Herstellung wird in US-Patentschrift 4 268 549 beschrieben. Es ist vorteilhaft, wenn die aus Copolymerisat CP aufgebauten Latexteilchen (= Streukörper SK) kugelförmig sind. Sie werden zweckmäßig nach dem sogenannten Saatlatex-Verfahren hergestellt und beispielsweise durch Sprühtrocknung unter Bedingungen, bei denen die Einzelpartikel nicht verschmelzen, zu einem Pulver getrocknet.
Der Brechungsindex des die Streukörper SK aufbauenden Copolymerisats CP und der des Matrixpolymerisats MP müssen sich hierbei um mindestens 0,02 Einheiten unterscheiden, um die erforderliche Streuwirkung zu erzielen.

Monomere p2) sind gemäß Formel I Methacrylsäureester, worin R₁ beispielsweise für n-Propyl, n-Butyl, iso-Butyl, tert-Butyl, n-Pentyl, Amyl, n-Hexyl, n-Heptyl, n-Octyl, 2-Ethylhexyl, n-Decyl, n-Dodecyl, n-Tetradecyl, n-Hexadecyl, n-Eicosyl sowie für die Alkylreste der Talgfettalkohole stehen kann. Ebenso kann R₁ für einen gegebenenfalls substituierten Cycloalkylrest stehen, wie beispielsweise Cyclopentyl, Cyclohexyl, 3,3,5-Trimethyl-Cyclohexyl oder Cyclooctyl.
Die vernetzenden Monomeren p3) können beispielsweise sein: (Meth)acrylester von Diolen, wie zum Beispiel Ethylenglykoldi(meth)acrylat oder 1,4-Butandioldi(meth)-acrylat; aromatische Verbindungen mit zwei Vinyl- oder Allylgruppen, wie beispielsweise Divinylbenzol oder Diallylphthalat; oder andere Vernetzer mit zwei ethylenisch ungesättigten, radikalisch polymerisierbaren Gruppen, wie z.B. Allylmethacrylat oder Pfropfvernetzer, Trimethylolpropandi(meth)acrylat, Hydrochinondi(meth)acrylat, Bisphenol-A-di(meth)acrylat oder N-Methyldi(meth)acrylamid. Als Vernetzer p3) mit drei oder mehr ungesättigten, radikalisch polymerisierbaren Gruppen seien beispielhaft Triallylcyanurat, Trimethylolpropantri(meth)acrylat sowie Pentaerythrittetra(meth)acrylat genannt. Weitere Beispiele hierzu sind in der US-PS 4 513 118 angegeben.
Die Comonomeren p4), die in Mengen von 0 bis 10 Gew.-% in Copolymerisat CP anwesend sein können, sind beispielsweise Monomere der Formel II: 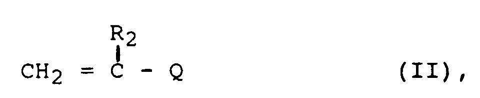 worin
- R₂: für Wasserstoff oder Methyl und
- Q: für COOR₃ steht, wobei R₃ für Wasserstoff oder ein einwertiges Kation, vorzugsweise für ein Alkalioder ein Ammoniumkation steht, oder wobei R₃ vorzugsweise eine Alkylgruppe, die eine Alkoxygruppe, eine Hydroxygruppe oder eine Aminoalkylgruppe mit vorzugsweise C1 bis C3-Alkylresten als Substituenten besitzt, darstellt. Für R₂ = H ist R₃ bevorzugt C1-C24-Alkyl.

Comonomere p4) sind beispielsweise: (Meth)acrylsäure, Salze der (Meth)acrylsäure, wie beispielsweise Natrium- oder Ammoniummethacrylat, Hydroxyalkylester der (Meth)acrylsäure, wie beispielsweise 2-Hydroxyethyl(meth)acrylat oder 2-Hydroxypropyl(meth)acrylat, Alkoxyalkylester der (Meth)acrylsäure, wie 2-Butoxyethyl(meth)acrylat oder 2-Methoxyethyl(meth)acrylat, sowie Aminoalkylester der (Meth)acrylsäure, wie 2-Dimethylaminoethyl(meth)acrylat, 2,2,6,6-Tetramethylpiperidyl-4-(meth)acrylat oder 3-Dimethylaminopropyl(meth)acrylat.
Bevorzugte Comonomere p4 sind C1-C24-Ester der Acrylsäure, z.B. Methylacrylat, Ethylacrylat, Butylacrylat, 2-Ethylhexylacrylat und Styrol und seine in der Regel C1- bis C3-alkylsubstituierten Derivate wie α-Methylstyrol, p-Methylstyrol, m-Methylstyrol.
Besonders bevorzugt ist das Copolymerisat CP aufgebaut aus 90 bis 99,5 Gew.-% einer Mischung aus Methylmethacrylat (Monomer p1) und einem niederen Alkylmethacrylat (Monomer p2) wie beispielsweise Isobutyl-oder n-Butylmethacrylat, im Gewichtsverhältnis 3 : 1 bis 1 : 3, sowie 0,5 bis 10 Gew.-% eines vernetzenden Monomeren p3).

### Das polymere Fließmittel FM

Das polymere Fließmittel FM wird in an sich bekannter Weise aus den Monomeren f1), f2) und gegebenenfalls f3) durch radikalische oder durch Gruppentransfer-Polymerisation gebildet (vgl. H. Rauch-Puntigam, Th. Völker, Acryl- und Methacrylverbindungen, Springer-Verlag, Heidelberg, 1967: Houben-Weyl, 4. Aufl., Band XIV/1, Seiten 1010ff, Thieme-Verlag, 1961). Die Polymerisation von FM kann in Masse, Suspension, Emulsion oder Lösung durchgeführt werden. Bei der radikalischen Polymerisation werden vorzugsweise Initiatoren, wie Peroxid-Verbindungen, besonders organische Peroxide wie Dibenzoylperoxid oder Lauroylperoxid, Azoverbindungen, wie Azodiisobutyronitril, oder Redox-Initiatoren in Mengen von 0,01 bis 5 Gew.-% bezogen auf die Monomeranteile eingesetzt. Die die Polymerisation auslösenden Radikale können auch durch hochenergetische Strahlung erzeugt werden. Als Polymerisationsregler kommen beispielsweise herkömmliche Schwefelverbindungen, wie beispielsweise Mercaptoverbindungen in Mengen von 0,1 bis 5 Gew.-% bezogen auf die Monomeranteile, in Frage.
Im allgemeinen liegen die mittleren Molekulargewichte Mw zwischen 2 x 10³ und 10⁶ Dalton, vorzugsweise zwischen 10⁴ und 2 x 10⁵ Dalton (Bestimmung beispielsweise durch Gelpermeationschromatographie: vgl. hierzu beispielsweise H.F. Mark et al., Encyclopedia of Polymer Science and Engineering, 2rd. Ed. Vol. 10, Seiten 1 bis 19, J. Wiley 1987). Die Uneinheitlichkeit U (= MW/Mn-1) der polymeren Fließmittel ML liegt im allgemeinen im Bereich zwischen 0,1 und 2.
Vorzugsweise enthalten die polymeren Fließmittel FM 20 bis 90 Gew.-% Monomereinheiten f1) und 10 bis 80 Gew.-% Monomereinheiten f2) der Formel I, wobei R₁ für einen Alkylrest mit 3 bis 24 Kohlenstoffatomen, vorzugsweise 4 bis 18 Kohlenstoffatomen, steht. Darüber hinaus ist die Befolgung der Regel von Vorteil, daß mit steigender Zahl der Kohlenstoffatome in R₁ der relative Anteil der Monomeren f2) am folgenden Fließmittel FM abnehmen soll, d.h. der relative Anteil dieser Monomeren soll sich gegenläufig zur Zahl der Kohlenstoffatome in R₁ verhalten.

Erfindungsgemäß gut brauchbare polymere Fließmittel FM können zum Beispiel die Zusammensetzung 50 Gew.-% Methylmethacrylat / 50 % Butylmethacrylat besitzen. Ebenso sind beispielsweise Fließmittel FM aus 70 Gew.-% Methylmethacrylat und 30 Gew.-% n-Decylmethacrylat brauchbar. Vorliegende Beobachtungen scheinen darauf hinzudeuten, daß zwischen den Methyl- bzw. Ethyl-Substituenten der Monomerkomponente f1) und den Substituenten R₁ der Monomerkomponente f2) ein Unterscheid von ≥ 2, bevorzugt ≥ 3 Kohlenstoffatomen bestehen muß. Derartig hergestellte polymere Fließmittel FM weisen zwischen 150 und 250° C ähnlich hohe Fließfähigkeiten wie die styrolhaltigen Matrixpolymerisate MP auf.
Die Fließmittel FM bilden mit den Matrixpolymerisaten MP verträgliche Polymermischungen PM, deren Charakterisierung nach anerkannten Kriterien erfolgt (vgl. hierzu Kirk-Othmer, Encyclopedia of Chemical Technology, 3rd. Ed., Vol. 18, Seiten 457 bis 460, J. Wiley, 1982; J. Brandrup, E.H. Immergut, Polymer Handbook, 2nd. Ed. III/211, Wiley Interscience, 1975). Bei den verträglichen Polymermischungen PM beobachtet man einen Brechungsindex und eine einzige Glasübergangstemperatur, die zwischen den Glastemperaturen der beiden Polymerisat-Komponenten FM und MP liegt. Als weiterer Hinweis für die Verträglichkeit wird das Auftreten der LCST (Lower Critical Solution Temperature) herangezogen, deren Existenz auf dem Vorgang beruht, daß sich beim Erwärmen die bis dahin klare transparente Mischung in verschiedene Phasen auftrennt und optisch trübe wird, was einen eindeutigen Beweis dafür darstellt, daß die ursprüngliche Polymermischung aus einer einzigen, im thermodynamischen Gleichgewicht befindlichen Phase bestand (vgl. hierzu beispielsweise D.R. Paul, Polymer Blends & Mixtures, Seiten 1 bis 3, Martinus Nijhoff Publishers, Dordrecht, Boston, 1985).
In einer weiteren Ausführungsform kommen Fließmittel auf Basis Polystyrol zum Einsatz. In diesem Fall geht man von relativ leicht fließenden Polystyrolformmassen aus.

### Das Matrixpolymerisat MP

Das Matrixpolymerisat MP ist aus mindestens 50 Gew.-% bevorzugt aus mindestens 75 Gew.-% und besonders bevorzugt aus mindestens 90 Gew.-% Styrol und/oder substituierten Styrolen als Monomereinheiten aufgebaut.
Das Matrixpolymerisat MP wird in an sich bekannter Weise durch Polymerisation der o.g. Monomeren hergestellt (vgl. R. Vieweg, G. Aumiller, Kunststoff-Handbuch, Band V, "Polystyrol", Curt Hanser, 1959; Ullmanns Enzyklopädie der Techn. Chemie, 4. Aufl, Band 19, Seiten 265, Verlag Chemie, 1980; Houben-Weyl, 4. Aufl., Band XIV/1, Seiten 753 ff, Georg Thieme, 1961). Styrol bzw. substituierte Styrole können kationisch, anionisch, radikalisch oder koordinativ polymerisiert werden, vorzugsweise wird jedoch radikalisch polymerisiert. Die Polymerisation kann dabei thermisch oder vorzugsweise durch Zusatz von Radikalinitiatoren, wie sie beispielsweise bei der o.a. Herstellung des polymeren Fließmittels FM angeführt werden, durchgeführt werden. Durch die Wahl des Polymerisationsinitiators kann man im gesamten Temperaturbereich eine hinreichende Polymerisationsgeschwindigkeit sicherstellen. Die mittleren Molekulargewichte Mw (zur Bestimmung von Mw s.o.) der Matrixpolymerisate MP liegen zwischen 10⁴ und 10⁶ Dalton, vorzugsweise zwischen 5 x 10⁴ und 5 x 10⁵ Dalton, besonders bevorzugt zwischen 10⁵ und 3,5 x 10⁵ Dalton.

Gegebenenfalls kann die polymere Matrixphase MP eine polymere Zähphase ZP in Anteilen von bis zu 30 Gew.-% enthalten, wobei die die polymere Zähphase ZP aufbauenden Partikel Teilchengrößen zwischen 0,01 und 20 µm aufweisen und in MP fein dispergiert sind. Die die Zähphase ZP ausbildenden Polymeren weisen Glasübergangstemperaturen Tg < 10 Grad C, bevorzugt < -10 Grad C auf und werden gewöhnlich unter dem Oberbegriff "Elastomere und Kautschuke" zusammengefaßt. Die die Zähphase ZP aufbauenden, gegebenenfalls vernetzten Polymerisate sind beispielsweise Polysiloxane, Ethylen-Vinylacetat-Copolymerisate, Polyacrylate, bevorzugt Polyolefine sowie besonders bevorzugt Polydiene. Die Herstellung solcher modifizierter Matrixphasen-Polymere MP ist bekannt und erfolgt beispielsweise durch Substanz-, Suspensions- oder Emulsionspolymerisation (vgl. Kirk-Othmer, loc.cit., Band 17, Seiten 470, 471; Band 21, Seiten 811 bis 816, J. Wiley 1982, 1983).

### Herstellung der lichtstreuenden Formmassen aus Matrixphase MP, Streukörper SK und gegebenenfalls Fließmittel FM

Die in Pulverform vorliegenden, aus Copolymerisat CP aufgebauten Streukörper SK werden mit dem Matrixpolymerisat MP und gegebenenfalls mit dem Fließmittel FM, die beispielsweise in Pulverform oder in Granulatform vorliegen können, zunächst unter Verwendung langsam laufender Mischaggregate, wie z.B. Trommel-, Rhönrad oder Doppelkammer-Pflugscharmischern, vorgemischt.
Die langsam laufenden Mischaggregate verursachen ein mechanisches Mischen, ohne daß in der Regel die Phasengrenzen aufgehoben werden (vgl. Ullmanns Enzyklopädie der Techn. Chemie, 4. Aufl. Band 2, Seiten 282 bis 311, Verlag Chemie, 1980).
In der Regel werden zunächst die sogenannten "Masterbatches", Gemische aus Streukörpern SK und Matrixphase MP oder Gemische aus Streukörpern SK und Fließmittel FM in Mischungsverhaltnissen SK : MP bzw. SK : FM von 3 : 1 bis 1 : 5, hergestellt. Anschließend erfolgt die thermoplastische Aufbereitung der Masterbatches durch homogenes Mischen der o.g. Mischungskomponenten in der Schmelze unter Verwendung von heizbaren Mischaggregaten bei den dafür geeigneten Temperaturen, beispielsweise zwischen 150 und 300° C in Knetern oder vorzugsweise Extrudern, z.B. Ein- oder Mehrschneckenextrudern oder gegebenenfalls in Extrudern mit oszillierender Schnecke und Scherstiften (z.B. im Bussco-Kneter). Mit diesen Verfahren werden im allgemeinen Gleichkornungsgranulate mit Korngrößen zwischen 2 und 5 mm hergestellt. Die Granulate bestehen aus einem thermoplastischen Anteil, aufgebaut aus MP oder FM, mit den darin eingelagerten dimensionsstabilen Streukörpern SK. In bestimmten Fällen kann der thermoplastische Anteil aus Gemischen von Matrixpolymerisat MP und Fließmittel FM im Mischungsverhältnis 10 : 1 bis 1 : 10 bestehen.
In einem zweiten Verarbeitungsschritt werden die "Masterbatches"-Granulate mit dem Granulat der Matrixphase MP, wie oben beschrieben, mechanisch und thermoplastisch in Mischungsverhältnissen Masterbatch : MP zwischen 1 : 3 und 1 : 100, bevorzugt zwischen 1 :5 und 1 : 50 gemischt. Die resultierenden, lichtstreuenden Formmassen werden nach dem thermoplastischen Verarbeitungsschritt granuliert. Sie stehen damit für eine weitere Verarbeitung, beispielsweise zu Formkörpern oder Platten per Spritzguß oder Extrusion, zur Verfügung.
In der Regel enthalten die erfindungsgemäßen lichtstreuenden Formmassen aus Matrixphase MP, Streukörper SK und gegebenenfalls Fließmittel FM noch Lichtschutzmittel, wie z.B. UV-Absorber, Stabilisatoren wie z.B. Radikalfänger sowie Gleitmittel und Trennmittel. (Eine Auswahl geeigneter Verbindungen wird in R. Gächter, Taschenbuch der Kunststoffadditive, 3. Ausgabe 1989, Hanser Verlag, angegeben). Besondere Bedeutung kommt der Verwendung von UV-Absorbern zu. UV-Absorber sind in der Regel in Anteilen von 0,01 - 2 Gew.-% in der lichtstreuenden Formmasse enthalten. Besonders bevorzugt ist es, die UV-Absorber, z.B. vom Typ Benztriazol, bereits in den Masterbatch in erhöhter Konzentration, z.B. 0,1 - 10 Gew.-%, bevorzugt 0,5 bis 5 Gew.-% einzuarbeiten. In einer besonders bevorzugten Ausführungsform enthält der Masterbatch 1 - 20 Gew.-% UV-Absorber, z.B. Tinuvin® P (Ciba Geigy), bezogen auf den im Masterbatch enthaltenen Anteil an Streukörper SK.

### Eigenschaften der erfindungsgemäßen lichtstreuenden Formmassen

Je nach Menge der eingesetzten Streukörper SK können durchscheinende bis opake lichtstreuende Formmassen hergestellt werden.
Durch die Herstellung von Masterbatches können die in der Regel pulverförmigen Streukörper SK staubfrei in die polymere Matrixphase MP eingearbeitet werden. Aufgrund der sehr guten Fließfähigkeiten der polymeren Fließmittel FM kann der Anteil der Streukörper SK in Masterbatches, bestehend aus SK und FM, sehr hoch gewählt werden.
Die sehr feinteiligen Streukörper SK können überraschend gut sehr homogen in der polymeren Matrix MP verteilt werden. Dabei treten weder lokale Agglomerate (sogenannte "Wolkenbildung") noch Sedimentation, wie beispielsweise bei den anorganischen Füllstoffen hoher Dichte, auf.
Bei guter Streuwirkung, (d.h. beispielsweise, Lichtquellen werden nicht mehr auf der Oberfläche von Formkörpern abgebildet, die mit der erfindungsgemäßen lichtstreuenden Formmasse hergestellt wurden) ist die Gesamtlichtdurchlässigkeit gegenüber den Formmassen des Standes der Technik deutlich verbessert.
Die Streukörper SK behalten unter den Temperatur- und Scherbedingungen einer Extrusion ihre Gestalt bei, wobei der für die Lichtstreuwirkung erforderliche Sprung in der Brechzahl zwischen Matrixphase MP und Streukörper SK erhalten bleibt. Dies ist umso überraschender, da die Verträglichkeit zwischen Matrixpolymerisat MP und unvernetztem Streukörper-Copolymerisat CP, die die homogene Verteilung der Streukörper gewährleistet, einen kontinuierlichen Übergang der Brechzahl an der Phasengrenze Streukörper SK / Matrixpolymerisat MP erwarten ließ.

Aus den erfindungsgemäßen lichtstreuenden Formmassen hergestellte Formkörper, wie beispielsweise Lampen oder Projektionsschirme streuen das Licht hervorragend bei gleichzeitig hoher Lichttransmission. Dies ermöglicht eine maximale Ausleuchtung von Räumen bzw. Projektionssysteme mit reduzierter Lichtleistung und damit reduzierter Wärmeentwicklung.

In der Regel enthalten die lichtstreuenden Polystyrolformmassen bevorzugt 0,2 - 5,0 Gew.-% Streukörper SK aus den Copolymeren CP. Wie ausgeführt, wird jedoch im allgemeinen zunächst ein Masterbatch mit erhöhten Anteil an Streukörpermaterial SK (z.B. 5 - 60 Gew.-%), bevorzugt 10 - 50 Gew.-%, besonders bevorzugt 20 - 40 Gew.-%) hergestellt, der dann mit Matrixpolymeren auf den erforderlichen Gehalt an Streukörpern SK in der lichtstreuenden Formmasse verdünnt wird. In einer besonders bevorzugten Ausführungsform wird auch der in der Regel erforderliche UV-Absorber in Anteilen von in der Regel 1 - 10 Gew.-% bereits dem Masterbatch zugemischt.

Die folgenden Beispiele sollen die Erfindung erläutern.

### BEISPIELE

### Beispiel 1:

### Herstellung der Streukörper SK

In einem Polymerisationsgefäß mit Rührer, Außenkühlung und Zulaufgefäß wurden 1 200 Gew.-Teile vollentsalztes Wasser vorgelegt und auf 80° C erhitzt. Anschließend wurden 6 Gew.-Teile Ammoniumperoxodisulfat und 5 Gew.-Teile einer Mischung M bestehend aus 47,5 Gew.-% Methylmethacrylat, 47,5 Gew.-% Isobutylmethacrylat und 5 Gew.-% Glykoldimethacrylat zugegeben. Nach 5 Minuten wurden innerhalb von 1 Stunde weitere 295 Gew.-Teile der Mischung M zugetropft. Nach Ende des Zulaufs wurde 1 Stunde bei 80° C gerührt, dann abgekühlt und über ein VA-Siebgewebe abfiltriert. Die erhaltene Dispersion I war koagulatfrei und hatte einen Feststoffgehalt von 20 %. Der mittlere Teilchendurchmesser betrug ca. 0,65 µm.
In einer 2. Stufe wurden in einem Polymerisationsgefäß 280 Gew.-Teile volentsalztes Wasser und 5,5 Gew.-Teile der oben beschriebenen Dispersion I vorgelegt und auf 80 Grad C erhitzt. Anschließend wurden 0,18 Gew.-Teile Ammoniumperoxidisulfat und eine Emulsion bestehend aus 215 Gew.-Teilen Methylmethacrylat, 215 Gew.-Teilen Isobutylmethacrylat, 23 Gew.-Teilen Glykoldimethacrylat, 800 Gew.-Teilen vollentsalztem Wasser 0,68 Gew.-Teilen Natriumlaurylsulfat und 1,6 Gew.-Teilen Ammoniumperoxidisulfat während 4 Stunden zugetropft. Nach Zulaufende wurde 1 Stunde und nach Zugabe von 0,45 Gew.-Teilen Ammoniumperoxidisulfat eine weitere Stunde bei 80 Grad C endpolymerisiert. Die erhaltene Dispersion war koagulatfrei und hatte einen Feststoffgehalt von 30 %. Der mittlere Teilchendurchmesser der Latexpartikel, die teilweise oder vollständig zu größeren Partikeln locker aggregiert sein können, betrug etwa 2,5 µm. Der Brechungsindex des Copolymerisats CP wurde aus den Inkrementen der Polymerbausteine nach J. Brandrup, E.H. Immergut, Polymer Handbook, 3. Aufl., VI/451, Wiley Interscience, New York zu n_{D}²⁰ = 1,485 berechnet.

### Beispiel 2:

### Herstellung des polymeren Fließmittels FM

5 000 g Methylmethacrylat und 5 000 g Butylmethacrylat werden gemischt, mit 100 g Dodecylmercaptan als Regler und 15 g t-Butylperoxyneodecynoat und 5 g t-Butylperoxy-2-ethylhexanoat als Initiator versetzt, in einen Hostaphan®-Beutel (Warenzeichen der Fa. Hoechst AG) gefüllt und 24 Stunden bei 45° C und nachfolgend 10 Stunden bei 80° C polymerisiert.
Man erhält einen glasklaren Kunststoffblock, der gemahlen und in einem Extruder entgast und granuliert wird. Das erhaltene Kunststoffgranulat hat einen J-Wert: J = 25 ml/g.

### Beispiel 3:

### Herstellung eines Masterbatchs MB1 bestehend aus SK und MP

50 Gew.-Teile des sprühgetrockneten Emulsionspolymerisats gemäß Beispiel 1 (SK) und 50 Gew.-Teile Polystyrol (MP) (Vestyron® 114, Fa. Hüls) wurden in einem Schmelzekneter bei 200° C bei 30 Umdrehungen/Minute gemischt. Es resultierte eine homogene Schmelze (Drehmoment: 5 Nm). Der so hergestellte Masterbatch MB1 wurde vor der weiteren Verarbeitung zu einem feinen Pulver gemahlen.

### Beispiel 4:

### Herstellung eines Masterbatchs MB2 bestehend aus SK und FM

50 Gew.-Teile des sprühgetrockneten Emulsionspolymerisats gemäß Beispiel 1 (SK) und 50 Gew.-Teile eines Copolymerisats FM aus 50 Gew.-% Methylmethacrylat und 50 Gew.-% n-Butylmethacrylat (Material gemäß Beispiel 2) wurden in einem Schmelzekneter bei 200° C bei 30 Umdrehungen/Minute gemischt. Es resultierte eine homogene und sehr leicht fließende Schmelze (Drehmoment: 1,0 Nm). Der so hergestellte Masterbatch MB2 wurde vor der weiteren Verarbeitung zu einem feinen Pulver gemahlen.

### Beispiele 5 - 7:

### Herstellung der lichtstreuenden Formmassen und darauf gebildeter Formkörper

Auf das Matrixpolymerisat MP wurden die Streukörper SK gemäß Beispiel in einer Konzentration von 1 % bzw. die Masterbatche MB1 und MB2 in Konzentrationen von 2 % in einem Taumelmischer aufgetrommelt. Um eine bessere Haftung der pulverförmigen Komponente zu erzielen und zur Vermeidung übermäßiger Staubentwicklung beim Mischen war das granulatförmige Matrixpolymerisat MP zuvor mit 0,1 % Paraffinöl benetzt worden. Aus diesen Mischungen wurden 1,5 mm dicke Platten spritzgegossen, an denen die Gesamtlichtdurchlässigkeit gemessen wurde sowie das Durchscheinen einer Lichtquelle visuell beurteilt wurde. Die Ergebnisse sind in Tabelle 1 aufgeführt.

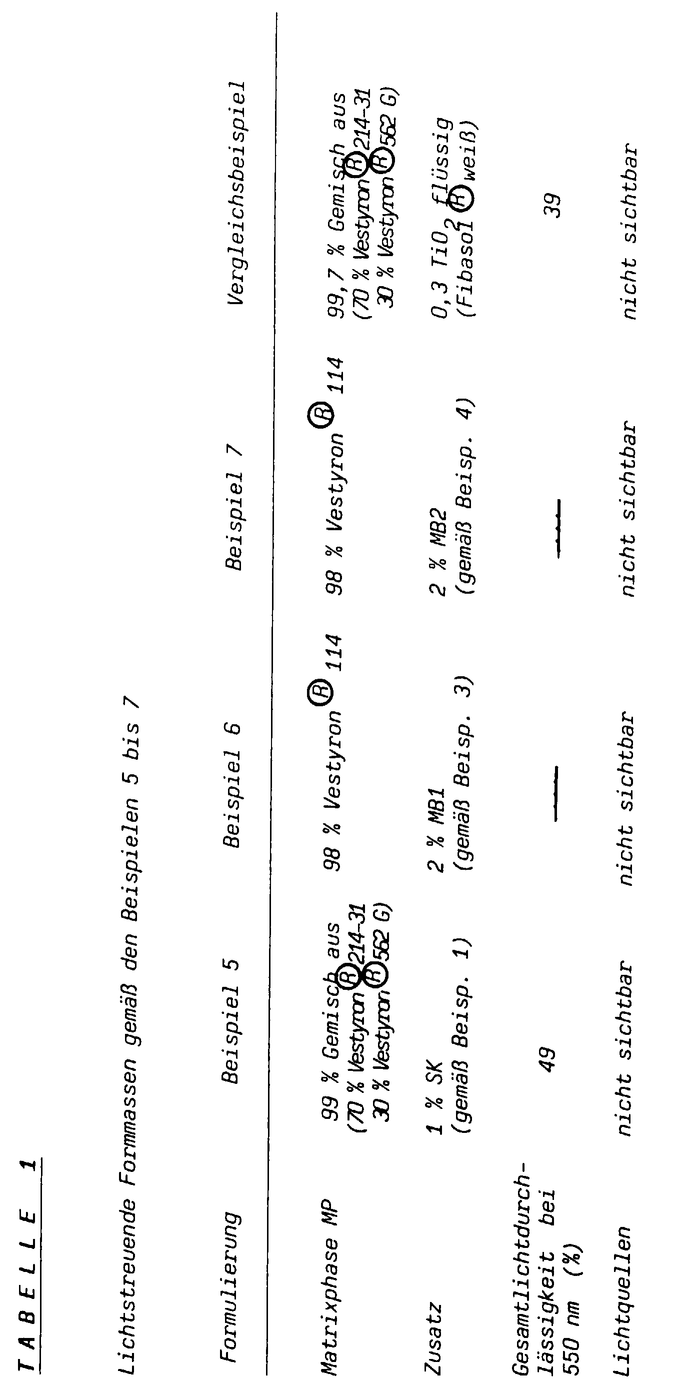

## Patentansprüche

1. Lichtstreuende Polystyrolformmassen bestehend aus 40 bis 99,9 Gew.-% einer polymeren Matrixphase MP, aufgebaut aus mindestens 50 Gew.-Teilen Styrol und/oder substituierten Styrolen und aus 0,1 bis 60 Gew.-% Streukörpern SK,
dadurch gekennzeichnet,
daß die Streukörper SK aus einem Copolymerisat CP bestehen, das aufgebaut ist aus:
p1) 20 bis 89,5 Gew.-Teilen Methylmethacrylat und/oder Ethylmethacrylat,
p2) 10 bis 80 Gew.-Teilen mindestens eines Monomeren der Formel I: 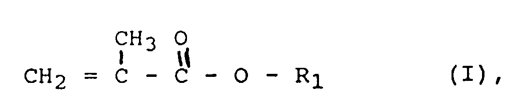 worin R₁ für einen Alkylrest mit 3 bis 24 Kohlenstoffatomen steht,
p3) 0,5 bis 10 Gew.-Teilen mindestens eines vernetzenden Monomeren mit zwei oder mehr ethylenisch ungesättigten, radikalisch polymerisierbaren Gruppen und
p4) 0 bis 10 Gew.-Teilen weiteren mit p1), p2) und p3) radikalisch coopolymerisierbaren, ethylenisch ungesättigten Monomeren,
wobei sich die Monomeren p1), p2), p3) und p4) zu 100 Gew.-Teilen ergänzen, mit der Maßgabe, daß sich die Brechungsindices des Copolymerisats CP und des Matrixpolymeren MP um mindestens 0.02 Einheiten unterscheiden.

2. Lichtstreuende Polystyrolformmassen gemäß Anspruch 1, dadurch gekennzeichnet, daß den Streukörpern SK in Anteilen von 5 bis 95 Gew.-Teilen bezogen auf SK ein polymeres Fließmittel FM zugemischt ist, aufgebaut aus:
f1) 20 bis 90 Gew.-% Methylmethacrylat und/oder Ethylmethacrylat,
f2) 10 bis 80 Gew.-% mindestens eines Monomeren der Formel I und
f3) 0 bis 10 Gew.-% weiteren mit f1) und f2) radikalisch polymerisierbaren, ethylenisch ungesättigten Monomeren,
wobei sich die Monomeren f1), f2) und f3) zu 100 Gew.-% ergänzen.

3. Lichtstreuende Polystyrolformmassen gemäß den Ansprüchen 1 und 2, dadurch gekennzeichnet, daß die polymere Matrixphase in Anteilen von bis zu 30 Gew.-% eine gegebenenfalls vernetzte polymere Zähphase ZP mit einer Glasübergangstemperatur Tg < 10 Grad C enthält.

4. Lichtstreuende Polystyrolformmassen gemäß den Ansprüchen 1 bis 3, dadurch gekennzeichnet, daß die Streukörper SK eine mittlere Teilchengröße zwischen 0,1 und 150 µm aufweisen.

5. Lichtstreuende Polystyrolformmassen gemäß den Ansprüchen 1 bis 3, dadurch gekennzeichnet, daß die Streukörper SK eine mittlere Teilchengröße zwischen 1 und 10 µm aufweisen.

6. Lichtstreuende Polystyrolformmassen gemäß den Ansprüchen 1 bis 5, dadurch gekennzeichnet, daß das die Streukörper aufbauende Copolymerisat CP aufgebaut ist aus:
90 bis 99,5 Gew.-% einer Mischung aus Methylmethacrylat und aus Isobutylmethacrylat und/oder n-Butylmethacrylat im Gewichtsverhältnis 3 : 1 bis 1 : 3, sowie 0,5 bis 10 Gew.-% eines vernetzenden Monomeren p3).

7. Lichtstreuende Polystyrolformmasse gemäß den Ansprüchen 1 - 6, dadurch gekennzeichnet, daß die Masse zu 0,2 - 5,0 Gew.-% Streukörper SK aus dem Copolymeren enthält.

8. Lichtstreuende Polystyrolformmasse (Masterbatch) gemäß den Ansprüchen 1 - 6, dadurch gekennzeichnet, daß die Masse zu 5 - 60 Gew.-% Streukörper SK aus dem Copolymeren CP enthält.

9. Lichtstreuende Polystyrolformmasse gemäß den Ansprüchen 1 - 8, dadurch gekennzeichnet, daß die Masse 0,01 - 2 Gew.-% eines UV-Absorbers enthält.

10. Formkörper aus den lichtstreuenden Polystyrolformmassen gemäß den Ansprüchen 1 bis 9.

## Claims

1. Light-scattering polystyrene moulding compounds comprising 40 to 99.9 wt.% of a polymeric matrix phase MP, synthesised from at least 50 parts by weight of styrene and/or substituted styrenes and 0.1 to 60 wt.% of scattering bodies SK,
characterised in that the scattering bodies SK comprise a copolymer CP synthesised from :
p1) 20 to 89.5 parts by weight of methylmethacrylate and/or ethylmethacrylate,
p2) 10 to 80 parts by weight of at least one monomer of formula I: 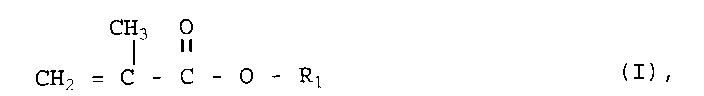 wherein R₁ is an alkyl group having 3 to 24 carbon atoms,
p3) 0.5 to 10 parts by weight of at least one cross-linking monomer having 2 or more ethylenically unsaturated, radically polymerisable groups, and
p4) 0 to 10 parts by weight of further ethylenically unsaturated monomers radically polymerisable with p1), p2) and p3),
whilst the monomers p1), p2), p3) and p4) make up 100 parts by weight with the proviso that the refractive indices of the copolymer CP and the matrix polymer MP differ by at least 0.02 units.

2. Light-scattering polystyrene moulding compounds according to claim 1, characterised in that the scattering bodies SK are mixed with 5 to 95 parts by weight based on SK of a polymeric flow agent FM synthesised from:
f1) 20 to 90 wt.% of methylmethacrylate and/or ethylmethacrylate,
f2) 10 to 80 wt.% of at least one monomer of formula I and
f3) 0 to 10 wt.% of further ethylenically unsaturated monomers radically polymerisable with fl) and f2),
the monomers f1), f2) and f3) making up 100 wt.%.

3. Light-scattering polystyrene moulding compound according to claims 1 and 2, characterised in that the polymer matrix phase contains in amounts of up to 30 wt.% an optionally cross-linked polymer viscous phase ZP with a glass transition temperature Tg < 10°C.

4. Light-scattering polystyrene moulding compound according to claims 1 to 2, characterised in that the scattering bodies SK have an average particle size of between 0.1 and 150 µm.

5. Light-scattering polystyrene moulding compound according to claims 1 to 3, characterised in that the scattering bodies SK have an average particle size of between 1 and 10 µm.

6. Light-scattering polystyrene moulding compound according to claims 1 to 5, characterised in that the copolymer CP contained in the scattering bodies is synthesised from
90 to 99.5 wt.% of a mixture of methylmethacrylate and isobutylmethacrylate and/or n-butylmethacrylate in a weight ratio of 3 : 1 to 1 : 3, as well as 0.5 to 10 wt.% of a cross-linking monomer p3).

7. Light-scattering polystyrene moulding compound according to claims 1 to 6, characterised in that the compound contains 0.2 to 5.0 wt.% of scattering bodies SK comprising the copolymer.

8. Light-scattering polystyrene moulding compound (master batch) according to claims 1 to 6, characterised in that the compound contains 5 to 60 wt.% of scattering bodies SK comprising the copolymer CP.

9. Light-scattering polystyrene moulding compound according to claims 1 to 8, characterised in that the compound contains 0.01 to 2 wt.% of an ultraviolet absorber.

10. Moulding bodies made of the light-scattering polystyrene moulding compounds according to claims 1 to 9.

## Revendications

1. Masses à mouler de polystyrène diffusant la lumière, se composant de 40 à 99,9% en poids d'une phase de matrice polymère MP formée d'au moins 50 parties en poids de styrène et/ou de styrènes substitués, et de 0,1 à 60% en poids de corps diffusants SK,
caractérisées en ce que les corps diffusants SK se composent d'un copolymère CP qui est formé de
p1) 20 à 89,5 parties en poids de méthacrylate de méthyle et/ou de méthacrylate d'éthyle,
p2) 10 à 80 parties en poids d'au moins un monomère de formule I 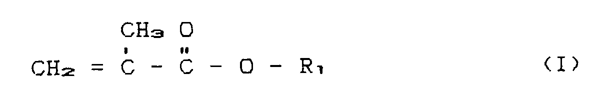 dans laquelle R₁ est mis pour un reste alkyle à 3-24 atomes de carbone,
p3) 0,5 à 10 parties en poids d'au moins un monomère réticulant, comportant deux ou plusieurs groupements à insaturation éthylénique susceptibles de polymérisation radicalaire, et
p4) 0 à 10 parties en poids d'autres monomères à insaturation éthylénique susceptibles de copolymérisation radicalaire avec p1), p2) et p3),
les proportions des monomères p1), p2), p3) et p4) s'additionnant à 100 parties en poids, étant spécifié que les indices de réfraction du copolymère CP et du polymère de matrice MP présentent une différence d'au moins 0,02 unité.

2. Masses à mouler de polystyrène diffusant la lumière selon la revendication 1, caractérisées en ce qu'il est ajouté et mélangé aux corps diffusants SK, dans des proportions de 5 à 95 parties en poids par rapport à SK, un agent de fluidification polymère FM, composé de
f1) 20 à 90% en poids de méthacrylate de méthyle et/ou de méthacrylate d'éthyle,
f2) 10 à 80% en poids d' au moins un monomère de formule I et
f3) 0 à 10% en poids d'autres monomères à insaturation éthylénique, susceptibles de polymérisation radicalaire avec f1) et f2),
les proportions des monomères f1), f2) et f3) s'additionnant à 100% en poids.

3. Masses à mouler de polystyrène diffusant la lumière selon la revendication 1 ou 2, caractérisées en ce que la phase de matrice polymère contient, dans des proportions allant jusqu'à 30% en poids, une phase visqueuse polymère, éventuellement réticulée, ayant une température de transition vitreuse Tg inférieure a 10°C.

4. Masses à mouler de polystyrène diffusant la lumière selon l'une quelconque des revendications 1 à 3, caractérisées en ce que les corps diffusants SK présentent une taille de particules moyenne comprise entre 0,1 et 150 µm.

5. Masses à mouler de polystyrène diffusant la lumière selon l'une quelconque des revendications 1 à 3, caractérisées en ce que les corps diffusants SK présentent une taille de particules moyenne comprise entre 1 et 10 µm.

6. Masses à mouler de polystyrène diffusant la lumière selon l'une quelconque des revendications 1 à 5, caractérisées en ce que le copolymère CP constituant les corps diffusants est composé de
90 à 99,5% en poids d'un mélange de méthacrylate de méthyle et de méthacrylate d'isobutyle et/ou de méthacrylate de n-butyle dans un rapport pondéral de 3:1 à 1:3, ainsi que de 0,5 à 10% en poids d'un monomère réticulant p3).

7. Masse à mouler de polystyrène diffusant la lumière selon l'une quelconque des revendications 1 à 6, caractérisée en ce que la masse contient des corps diffusants SK de copolymère CP à raison de 0,2 à 5,0°% en poids.

8. Masse à mouler de polystyrène (mélange maître) diffusant la lumière selon l'une quelconque des revendications 1 à 6, caractérisée en ce que la masse contient des corps diffusants SK de copolymère CP à raison de 5 à 60% en poids.

9. Masse à mouler de polystyrène diffusant la lumière selon l'une quelconque des revendications 1 à 8, caractérisée en ce que la masse contient de 0,01 à 2% en poids d'un agent absorbant l'UV.

10. Corps moulés fabriqués à partir des masses à mouler de polystyrène diffusant la lumière selon l'une quelconque des revendications 1 à 9.
